**Europäisches Patentamt**

**European Patent Office**

**Office européen des brevets**

(19)

(11) Veröffentlichungsnummer: **0 356 871**
**A2**

# (12) EUROPÄISCHE PATENTANMELDUNG

(21) Anmeldenummer: **89115422.1**

(22) Anmeldetag: **22.08.89**

(51) Int. Cl.⁵: **H04R 1/02 , H04N 5/64**

(30) Priorität: **30.08.88 DE 3829278**

(43) Veröffentlichungstag der Anmeldung:
**07.03.90 Patentblatt 90/10**

(84) Benannte Vertragsstaaten:
**AT BE CH DE ES FR GB GR IT LI LU NL SE**

(71) Anmelder: **TELEFUNKEN Fernseh und
Rundfunk GmbH
Göttinger Chaussee 76
D-3000 Hannover 91(DE)**

Anmelder: **EWD Electronic-Werke
Deutschland GmbH**

**D-7730 Villingen-Schwenningen(DE)**

(72) Erfinder: **Thiele, Karl-Heinz, Dipl.-Phys.
Lerchenweg 1
D-3150 Peine(DE)**
Erfinder: **Peters, Arne
Goldkamp 7b
D-3004 Isernhagen HB(DE)**

(74) Vertreter: **Körner, Peter, Dipl.-Ing.
TELEFUNKEN Fernseh und Rundfunk GmbH
Patent- und Lizenzabteilung Göttinger
Chaussee 76
D-3000 Hannover 91(DE)**

(54) **Lautsprecheranordnung für einen HDTV-Fernsehempfänger.**

(57) Ein HDTV-Empfänger hat eine relatiy große Bildbreite von etwa 75 cm. Die Aufgabe besteht darin, für einen solchen Empfänger eine für die Tonwiedergabe optimale Anordnung der Lautsprecher zu schaffen, ohne daß die Gehäusebreite durch die Lautsprecher erhöht wird.

Unterhalb der Bildröhre 13 sind zwei nach vorne strahlende Hochtöner (1) und zwei Breitbandlautsprecher (3) vorgesehen, deren akustische Wirkung durch je einen Teilbereichslautsprecher (8) mit anderer Abstrahlrichtung unterstützt ist.

Insbesondere für einen HDTV-Fernsehempfänger mit Bildschirmabmessungen 42/75 cm.

Fig.2

## Lautsprecheranordnung für einen HDTV-Fernsehempfänger

Bei Fernsehempfängern für hochauflösende Fernsehsysteme (HDTV) werden Bildröhren mit neuartigen, bisher nicht üblichen Abmessungen verwendet. Das Bildformat hat dabei ein Seitenverhältnis von 16:9. Ein Bildröhre für dieses Format hat etwa eine Bildschirmbreite von 75 cm und eine Bildschirmhöhe von 43 cm.

Bei derartigen Maßen, also einem ungewöhnlich breiten Bildschirm, bereitet die Unterbringung der notwendigen Lautsprecher in der bisherigen Form Schwierigkeiten. Insbesondere ist es dann nicht mehr möglich oder aus Design-Gründen nachteilig, die Lautsprecher links und rechts des Bildschirms anzuordnen, weil dadurch die Gesamtbreite des Gehäuses zu groß wird.

Der Erfindung liegt die Aufgabe zugrunde, für einen HDTV-Fernsehempfänger eine Anordnung der Lautsprecher in dem Gehäuse zu schaffen, die eine einwandfreie Tonwiedergabe ermöglicht, ohne daß die Gehäusemaße über die Maße des Bildschirms hinaus vergrößert werden müssen.

Diese Aufgabe wird durch die im Anspruch 1 angegebene Erfindung gelöst. Vorteilhafte Weiterbildungen der Erfindung sind in den Unteransprüchen angegeben.

Bei der erfindungsgemäßen Lösung wird also durch eine besonders geschickte Anordnung der Lautsprecher eine einwandfreie Wiedergabe des NF-Frequenzbandes erreicht, ohne daß zu beiden Seiten des Bildschirms Lautsprecher vorgesehen sein müssen, die die Gehäusebreite unerwünscht vergrößern. Der Abstand der Lautsprecher wird vorzugsweise wesentlich kleiner gewählt als die minimale Wellenlänge des Schallfeldes, damit keine hörbaren Phasenverschiebungen auftreten. Der Winkel zwischen der akustischen Achse der nach vorne abstrahlenden Lautsprecher und der akustischen Achse der Teilbereichslautsprecher hat betragsmäßig einen Wert von $90° - 180°$, vorzugsweise in der Größenordnung von $110 - 140°$. Bei einem vorgegebenen Absolutwert dieses Winkels kann indessen die akustische Achse der Teilbereichslautsprecher gegenüber der Achse der nach vorn strahlenden Lautsprecher in alle denkbaren Richtungen geneigt sein, also gewissermaßen auf einer Kegeloberfläche entsprechend dem Absolutwert des Winkels rotieren. Vorzugsweise wird für die einzelnen Lautsprecher eine große Membranfläche gewählt, deren Maße im Anspruch 3 angegeben sind.

Die Erfindung wird im folgenden anhand der Zeichnung für verschiedene Werte des genannten Winkels erläutert. Darin zeigen

Fig. 1 ein Prinzipbild für die Anordnung der Lautsprecher,

Fig. 2 eine Vorderansicht und

Fig. 3 eine Seitenansicht eines Gehäuses für einen Fernsehempfänger.

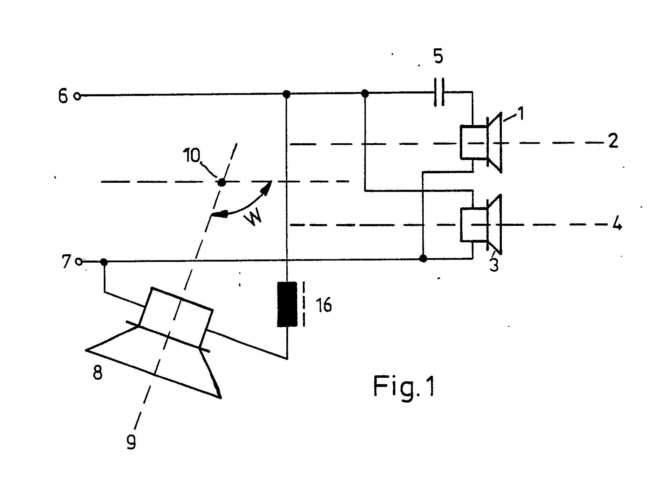

Fig. 1 zeigt den nach vorn strahlenden Hochtonlautsprecher 1 mit der akustischen Achse 2 und den ebenfalls nach vorn strahlenden Breitbandlautsprecher 3 mit der akustischen Achse 4. Der Lautsprecher 3 ist unmittelbar und der Lautsprecher 1 über den als Frequenzweiche dienenden Kondensator 5 an die das Signal führenden Klemmen 6, 7 angeschlossen. Außerdem ist an die Klemmen 6, 7 über die als Tiefpaß wirkende Drossel 16 der Teilbereichslautsprecher 8 angeschlossen, dessen akustische Achse 9 gegenüber den Achsen 2, 4 um den Winkel W geneigt ist. Der Winkel W hat hier einen Absolutwert von etwa $110°$. Das bedeutet, daß der Lautsprecher 8 schräg nach hinten strahlt. Die Achse 9 kann jedoch bei betragsmäßig gleichbleibendem Winkel W alle denkbaren Richtungen ein nehmen, also z.B. waagerecht zur Seite des Empfängers, schräg nach oben, schräg nach unter oder auch schräg zur anderen Seite des Empfängers. Die Achse 9 kann somit auf der Oberfläche eines Kegels rotieren, dessen Spitze im Punkt 10 liegt.

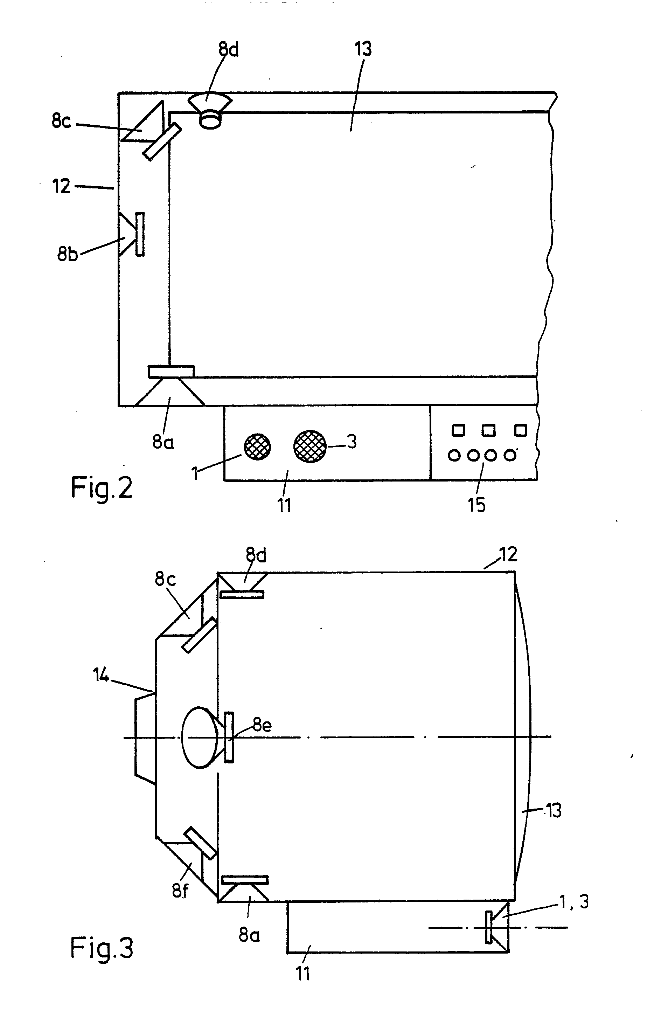

In Fig. 2 sind der Hochtonlautsprecher 1 und der Breitbandlautsprecher 3 in einem Gehäuseteil 11 untergebracht, das sich unterhalb des Gehäuses 12 befindet, als eine das Gehäuse 12 tragende Einheit dient und außerdem das Bedienfeld 15 für den Fernsehempfänger enthält. Durch das Gehäuseteil 11 hat der Boden des Gehäuses 12 an den beiden Seiten einen Abstand von der Stellfläche. Für den die akustische Wirkung der Breitbandlautsprecher 3 unterstützenden Teilbereichslautsprecher 8 sind in Fig. 2 verschiedene alternative Anbringungen dargestellt. Der Lautsprecher 8a hat eine senkrecht nach unten gerichtete Achse, der Winkel W beträgt also $90°$. Der Lautsprecher 8b hat eine waagerecht zur Seite gerichtete Achse, der Winkel W beträgt also ebenfalls $90°$, wobei nur die Richtung gegenüber dem Lautsprecher 8a anders ist. Der Lautsprecher 8c hat eine Achse, die schräg nach hinten nach oben gerichtet ist. Der Winkel W beträgt hierbei somit etwa $135°$. Der Lautsprecher 8d ist schräg nach hinten und nach oben gerichtet, jedoch nicht zur Seite. Der Wert des Winkels W beträgt also etwa $135°$. Von dem Gehäuse 12 und dem HDTV-Bildschirm 13 mit einer Bildbreite von 75 cm und einer Bildhöhe von 42 cm ist jeweils nur die linke Hälfte dargestellt. Die dargestellte Anordnung ist also rechts der Schnittlinie spiegelbildlich noch einmal zu denken.

Fig. 3 zeigt eine Seitenansicht des Gehäuses 12 wieder mit alternativen Anordnungen des Teilbereichslautsprechers 8. Der Lautsprecher 8e hat eine akustische Achse, die horizontal schräg nach hinten gerichtet ist. Der Winkel W beträgt also etwa 135°. Die akustische Achse des Lautsprechers 8f ist schräg nach hinten nach unten gerichtet. Der Winkel W beträgt also 135°.

## Ansprüche

1. Lautsprecheranordnung für einen HDTV-Fernsehempfänger mit mehreren in das Gehäuse (12) eingebauten Lautsprechern (1, 3, 8) für eine Stereo-Tonwiedergabe, **dadurch gekennzeichnet**, daß unterhalb der Bildröhre (13) an beiden Seiten des Gehäuses (12) zwei nach vorn strahlende Hochtonlautsprecher (1) sowie zwei nach vorn strahlende Breitbandlautsprecher (3) vorgesehen sind, deren akustische Wirkung durch je einen Teilbereichslautsprecher (8) unterstützt ist, dessen akustische Achse (9) gegenüber der Achse der nach vorn strahlenden Lautsprecher (1, 3) um einen Winkel von 90°-180° abweicht.

2. Lautsprecheranordnung nach Anspruch 1, **dadurch gekennzeichnet**, daß der Winkel (W) in der Größenordnung von 110°-140° liegt.

3. Lautsprecheranordnung nach Anspruch 1, **dadurch gekennzeichnet**, daß die wirksame Membranfläche bei den Hochtonlautsprechern (1) bis zu 30 cm², bei den Breitbandlautsprechern (3) 50 - 80 cm² und bei den Teilbereichslautsprechern (8) etwa 130 cm² beträgt.

4. Lautsprecheranordnung nach Anspruch 1, **dadurch gekennzeichnet**, daß die Hochton- und Breitbandlautsprecher (1, 3) in einem Gehäuseteil (11) angeordnet sind, das unterhalb des Bildschirm (13) in der Mitte des Gehäuses (12) nach unten vorstehend als das Gehäuse (12) tragende Einheit angeordnet ist.

5. Lautsprecheranordnung nach Anspruch 4, **dadurch gekennzeichnet**, daß die Teilbereichslautsprecher (8) neben oder hinter dem Gehäuseteil (11) im Boden des Gehäuses (12) angeordnet sind.

6. Lautsprecheranordnung nach Anspruch 4, **dadurch gekennzeichnet**, daß das Gehäuseteil (11) zusätzlich das Bedienteil (15) enthält.

7. Lautsprecheranordnung nach Anspruch 1, **dadurch gekennzeichnet**, daß die Teilbereichslautsprecher (8) in der Rückwand (14) des Gehäuses (12) schräg nach oben oder unten strahlend angeordnet sind.

H88/046-1

Fig.1

Fig.2

Fig.3